# EUROPÄISCHE PATENTSCHRIFT

(11) **EP 2 157 065 B1**
(45) Veröffentlichungstag und Bekanntmachung des Hinweises auf die Patenterteilung: **22.01.2014**
(21) Anmeldenummer: 09010199.9
(22) Anmeldetag: 07.08.2009
(51) Int. Cl.: C04B 35/44, C04B 35/443, C04B 35/645

(54) **Verfahren zur Herstellung einer transparenten polykristallinen Keramik**
Method for producing a polycrystalline transparent ceramic
Procédé de fabrication d'une céramique transparente poly-cristalline

(30) Priorität: 08.08.2008 DE 102008037037
(43) Veröffentlichungstag der Anmeldung: 24.02.2010
(73) Patentinhaber: CeramTec-Etec GmbH, 53797 Lohmar (DE)
(72) Erfinder: Schnetter, Lars, 53518 Wimbach (DE)
(74) Vertreter: Uppena, Franz

(56) Entgegenhaltungen:
- EP-A1- 1 443 032
- EP-A2- 1 557 402
- NAUM FRAGE ET AL: "Spark plasma sintering (SPS) of transparent magnesium-aluminate spinel", JOURNAL OF MATERIALS SCIENCE, KLUWER ACADEMIC PUBLISHERS, BO, Bd. 42, Nr. 9, 7. April 2007 (2007-04-07), Seiten 3273-3275, XP019503574, ISSN: 1573-4803, DOI: 10.1007/S10853-007-1672-0
- Wikipedia contributors: "Hot Pressing", , 7. Juli 2009 (2009-07-07), XP000002658396, Wikipedia, The Free Encyclopedia. Gefunden im Internet: URL:http://en.wikipedia.org/wiki/Hot_press ing

## Beschreibung

Die Erfindung betrifft ein Verfahren zur Herstellung einer transparenten polykristallinen Keramik gemäß Anspruch 1.

Um bspw. Militärfahrzeuge oder Zivilfahrzeuge vor einem Beschuss zu schützen, werden die Fahrzeuge gepanzert. Die Panzerung erfolgt üblicherweise mittels eines Metall-Systems oder mittels eines MetallKeramik-Systemes. Derartige Systeme sind jedoch für Fahrzeug-Fenster wie Seitenscheiben, die Frontscheibe usw, nicht geeignet. Fenster werden deshalb üblicherweise mit Panzerglas ausgestattet. Panzerglas besitzt jedoch eine relativ geringe ballistische Effizienz Insbesondere gegen Hartkern-Munltion, so dass die Fensterbereiche die Schwachstellen des jeweiligen Fahrzeuges darstellen. Außerdem ist bei Panzerglas ein großes Gewicht notwendig, um einen ausreichenden ballistischen Schutz zu gewährleisten.

Aus diesem Grunde wurde nach Alternativen für das Panzerglas gesucht. Diese Alternativen wurden i.W. im Spinell und AION gefunden. Auf Grund sehr hoher erforderlicher Prozeßtemperaturen sind diese bekannten Materialien grobkristallin mit Korngrößen > 1 µm bzw. > 10 µm. Aus diesen großen Korngrößen resultierend ergeben sich für diese bekannten Keramiken relativ geringe mechanische Kennwerte, d.h. im Vergleich zu submikronkristallinen Materialien relativ geringe Härten und Festigkeiten. Die großen Kristalle sind bei transluzentem Al₂O₃ notwendig, um eine ausreichende Transluzenz zu gewährleisten. Zur Erzielung einer Transparenz sind bspw. bei Al₂O₃ sehr kleine Korngrößen erforderlich. Grobkristallines Al₂O₃ wird nie transparent, sondern nur transluzent.

Aus der EP 1 557 402 A2 ist eine transparente polykristalline Keramik mit einer kubischen Kristallstruktur bekannt, die an einer 0,8 mm dicken polierten Scheibe für Licht einer Wellelänge zwischen 600 und 650 nm eine wahre InLine-Transmission (RIT) von >75% des theoretischen Maximalwertes und eine mittlere Korngröße D im Bereich 60 nm < D < 10 µm besitzt. Diese bekannte Keramik kann ≤ 5% zusätzliche Dotierungen enthalten, die im Kristallgitter als feste Lösungen oder als separate Phase mit einer Kristallitgröße von < 50 nm oder in beiden Formen vorliegt.

Die US 7 148 480 B2 offenbart ein optisches Fensterelement, das eine Schicht aus einem Material aufweist, das für IR-Strahlung durchlässig ist. Dieses Material wird in einem Verfahren hergestellt, bei dem Keramikkrlstalle von ≤ 100 nm bei einem Druck von 10 bis 200 MPa gepresst und einer Temperatur von 800 bis 1500 °C ausgesetzt werden. Während des Pressens werden die Partikel einem gepulsten elektrischen Strom von 250 bis 10.000 A/cm² ausgesetzt. Zur Erhöhung der Transparenz wird das Werkstück nachgetempert.

In der älteren DE 10 2007 059 091 der Anmelderin ist ein Verfahren zur Herstellung einer polykristallinen transparenten Keramik beschrieben, die für Licht einer Wellenlänge zwischen 600 und 650 nm eine RIT von > 40% des theoretischen Mittelwertes aufweist. Bei diesem Verfahren wird ein Keramikgranulat, das eine Primärkomgröße von ≤ 500 nm, vorzugsweise ≤ 300 nm, aufweist, durch zyklisches Pressen auf eine Gründichte von ≥ 40% der theoretischen Dichte (TD) verdichtet. Anschließend erfolgt eine Vorsinterung und ein Sinterhippen oder ein kontlnuierliches Sintern bis zum Auftreten einer geschlossenen Porosität und ein Nachhippen des zyklisch gepressten Körpers. Die hergestellte transparente Keramik besitzt eine Dichte von ≥99.8 % der TD.

EP1443032 offenbart ein Verfahren zur Herstellung eines Schneidwerkzeug-Einsatzes, wobei ein vorgeformtes Werkstück mit ungepulstem oder mit gepulstem Gleichstrom beaufschlagt wird.

" Spark Plasma Sintering (SPS) Of Transparent Magnesium-Aliminate Spinel " von " Naum Frage et Al " aus " Bd. 42, Nr 9, Seiten 3273-3275 von Journal of Material Science, Klumer Academic Publisher " beschreibt ein Verfahren zur Herstellung transparenter Mg-Al-Spinell.

Seit jüngerer Zeit ist bekannt, dass bei Korngrößen <1 µm bei doppelbrechenden Materialien die Transparenz wieder zunimmt, so dass hier kleinste Korngrößen zwingend notwendig sind. Außerdem nehmen die Festigkeit und die Härte bei diesen Keramiken mit abnehmender Korngröße deutlich zu.

Aus der Erkenntnis des Zusammenhangs zwischen den mechanischen Kennwerten und der Korngröße, sowie bei den doppelbrechenden Materialien dem Zusammenhang zwischen der Transparenz und der Korngröße, ergibt sich der Wunsch nach der Herstellung eines transparenten submikronkristallinen Keramikmaterials. Ein solches Herstellungsverfahren ist in der eingangs zitierten EP 1 557 402 A2 beschrieben. Hier kommt ein Gel-Casting, d.h. ein nasses Formgebungsverfahren zum Einsatz. Neben dem Gel-Casting ist auch das Slip-Casting, das Pressure-Casting und die elektrophoretische Abscheidung bekannt. Alle diese Formgebungsverfahren benötigen eine aufwendige Trocknung und/oder Entbinderung. Außerdern lässt die Oberflächengüte der hergestellten Gegenstände Wünsche offen, so dass eine aufwendige Oberflächen-Nachbehandlung erforderlich ist.

Der Erfindung liegt die Aufgabe zugrunde, ein Verfahren der eingangs genannten Art zu schaffen, das einfach und wirtschaftlich durchführbar ist, und mit dem submikronkristalline transparente Keramiken mit einer hohen Härte realislerbar sind.

Diese Aufgabe wird erfindungsgemäß durch die Merkmale des Anspruches 1 gelöst. Bevorzugte Weiterbildungen des erfindungsgemäßen Verfahrens sind in den Unteransprüchen gekennzeichnet.

Die erfindungsgemäß hergestellte transparente polykristalline Keramik unterscheidet sich von der aus der EP 1 557 402 A2 bekannten Keramik dadurch, dass nicht reine Werkstoffe mit kleinen Dotierungen versehen werden, sondern dass definitiv Mengen von > 5% eines zweiten Werkstoffes - vorzugsweise Al₂O₃- In den Spinell eingebracht werden, um dessen Härte zu steigern. Die Härte HV10 von Al₂O₂ beträgt > 2200, die Härte des Spinells nur > 1400.

Die Mischung aus Al₂O₃ und MgAl₂O₄ - Pulver hat den Vorteil, dass die Härte des Spinells gesteigert wird; gleichzeitig jedoch das kubische System des vorhandenen Spinells zum großen Teil vorhanden bleibt, um dessen kubisches System zu nutzen.

Bezüglich eines wirtschaftlichen und mechanischen Fortschritts bietet sich nach der ebenfalls eingangs zitierten US 7 148 480 B2 die Anwendung gepulsten elektrischen Stromes an. Dieses Spark Plasma Sintering (-SPS) bildet eine Alternative zum bekannten Heißpressen. Mit Hilfe des SPS können in relativ kurzen Prozeßzyklen Keramiken mit relativ großen Härten, feinen Gefügen und hohen Dichten hergestellt werden.

Durch das erfindungsgemäße Verfahren wurde jedoch überraschend festgestellt, dass durch die Verwendung von Gleichstrom ohne Pulsung bessere Ergebnisse erzielt werden als mit gepulstem Strom. Das ist mit Hilfe der FAST-Technologie möglich.

Im Vergleich zu dem bekannten SPS-Verfahren mit gepulstem Gleichstrom ergibt sich durch das erfindungsgemäße FAST-Verfahren mit ungepulstem Gleichstrom der Vorteil, dass die Sintertemperaturen weiter abgesenkt werden, und dass direkt Innerhalb eines Presszykius Transparenzgrade erzielt werden können, die keiner weiteren Temperung bedürfen. Im Vergleich zu dem aus der US 7 148 480 B2 bekannten Verfahren kann in vorteilhafter Weise also Prozeßzeit eingespart werden. Diese Einsparung kann bspw. bis 48 Stunden betragen. Um die Transparenz der hergestellten Keramik noch weiter zu verbessern, kann in einzelnen Fällen gegebenenfalls ein kurzer Hip-Zyklus an Luft erfolgen.

Transparenz ist nur möglich, wenn die Al₂O₃-Kristalie ausreichend klein sind - ein großer Anteil wird sich immer im Spinell-Gitter lösen -,und wenn die Restporosität < 0,05% beträgt.

Als besonders überraschend hat sich gezeigt, dass im Gegensatz zu den bekannten Herstellungsverfahren eine Transparenz schon bei Dichten von > 99,85% der TD erreicht wird. Das erklärt sich aus der Tatsache, dass durch die Verwendung der erfindungsgemäßen Technologie Porenradien von < 65 nm erzielt werden können. Die kleinen Porenradien ermöglichen im Vergleich zu gröberen Poren bei gleichen Dichten eine verbesserte Transparenz.

Falls in besonderen Fällen ein Nach-Hippen erforderlich ist, liegt eine weitere Besonderheit der vorliegenden Erfindung im Hippen (=Heißisostatisches Pressen). Das Material wird bspw. in einer widerstandsbeheizten Kanthal-Hippe oder in einer anderen Sauerstoff-resistenten Hippe - bevorzugt unter Luft - oder im Vakuum oder z.B. in einer Argorl-Atmosphäre gehippt. Durch den Verzicht auf Kohlenstoff-Heizelemente wird verhindert, dass Kohlenstoff-Verunreinigungen bzw. Reduktionserscheinungen auftreten. Das ist nur möglich, wenn die Hip-Temperatur < 1240°C, vorzugsweise < 1200°C, beträgt. Die relativ geringen Hip-Temperaturen bedingen in vorteilhafter Weise wiederum eine relativ geringe Vorsintertemperatur, so dass zum Hippen eine ausreichende Sinteraktivität vorhanden bleibt. Die Absenkung der Gesamttemperatur ist durch das erfindungsgemäße FAST-Varfahren möglich, da andere Herstellungsverfahren Hip-Temperaturen von > 1450°C benötigen.

Erfindungsgemäß können auch andere Hlp-Varianten wie Molybdän- oder Kohlenstoff-Hippen zur Anwendung gelangen. Besonders bevorzugt hinsichtlich erhöhter Transparenzgrade ist jedoch die Verwendung der oben erwähnten Kanthal-Hippe.

Zur abschließenden Präparation werden die hergestellten Gegenstände zweckmäßigerweise poliert, so dass sich RIT-Werte von > 70% ergeben.

Mit dem erfindungsgemäßen Verfahren ergibt sich eine transparente polykristalline Keramik im System Al₂O₃- MgAl₂O₄, die quasi keine Glasphase enthält, d.h. die < 0,1% beträgt. Die Dichte der hergestellten Keramik beträgt > 99,5%, vorzugsweise > 99,9% der TD. Voraussetzung hierfür sind Ausgangsstoffe mit einer Reinheit von ≥ 99,9% und mit einer Ausgangskorngröße von ≤ 500 nm, vorzugsweise ≤ 300 nm.

Die bei dem erfindungsgemäßen Verfahren zur Anwendung gelangenden Pulver können bspw. als fertige Mischung bezogen werden. Eine andere Möglichkeit besteht darin, Al₂O₃ mit MgAl₂O₄-Pulver durch Mischmahlung und anschließender Trocknung herzustellen. Eine weitere Möglichkeit besteht in der Verwendung von MgO- und + Al₂O₃-Pulver. Zur Herstellung einer transparenten Keramik sind bspw. auch YAG-, kubische Y-Al-Verbindungs-Pulver, AION- oder ZrO₂-Pulver verwendbar.

Vorzugsweise soll die hergestellte Keramik nahezu keine Porosität besitzen, d.h. diese sollte ≤ 0,1% betragen. Die Korngröße soll < 10 µm, vorzugsweise < 1µm, betragen. Weniger als 5% Körner können > 1 µm groß sein.

Die Kombination aus höchster Dichte und geringsten Porenradien der Restporen garantiert RIT-Werte (Real Inline Transmission)-Werte ≥ 70%.

Aus der Kombination der angegebenen Werte ergibt sich, dass die erfindungsgemäß hergestellte Keramik über die Transluzenz hinaus transparent ist und bei Wandstärken ≥ 2 mm Härten von > 16 GPa besitzt. Das Ist ein wesentlicher Unterschied zu den bekannten transparenten Keramiken, wie sie oben beschrieben worden sind. Die bekannten transparenten Keramiken weisen bei Wandstärken ≥ 2 mm aufgrund der Tatsache, dass nur nicht kubische isolatorische Systeme Härten von > 16 GPa aufweisen, eine verringerte Transparenz RIT<50% auf. Die erfindungsgemäß realisierbare Härte HV10 von > 16 GPa ist besonders wichtig, da bspw. im ballistische Anwendungsgebiet Wolframkarbid-Geschosse eine Härte von etwa 16 GPa aufweisen. Keramiken mit Härten von < 16 GPa sind folglich bezüglich derartiger Geschosse ineffektiv.

Zur weiteren Verdeutlichung der Erfindung dienen die nachfolgenden Beispiele, wobei es sich versteht, dass die Erfindung hierauf nicht beschränkt ist.

### Beispiel 1;

Spinell wird mit Al₂O₃-Pulver mittels Rührwerks-Kugelmahlung 2 Stunden einer Mischmahlung ( 70% Spinell + 30% Al₂O₃ ) unterzogen. Die Trocknung erfolgt in einem Gefriertrockner. Anschließend wird das Pulvergemisch einem Zyklus in einer FAST-Presse unterzogen. Der Preßdruck beträgt 40 MPa. Die Aufheizrate beim FAST-Pressen beträgt anfangs 100 K/min; sie wird bei 1200°C auf 10 K/min reduziert. Bei der Maximaltemperatur von 1300°C erfolgt eine Haltezeit von 30 min. Die anschließende Abkühlung erfolgt ungeregelt. Danach stellt sich eine Dichte von > 99,9% der TD ein. Der gemessene Transparenzgrad liegt bei 71% des theoretisch möglichen Wertes des Spinells.
Der gesamte Verfahrenszyklus dauert - ohne Abkühlung -47 min. Die resultierende Korngröße beträgt ca. 600 nm und die Härte HV10 beträgt 17,5GPa.

### Beispiel 2;

Spinell wird mit Al₂O₃-Pulver mittels Rührwarks-Kugelmahlung 2 Stunden einer Mischmahlung ( 70% Spinell + 30% Al₂O₃ ) unterzogen. Die Trocknung erfolgt in einem Gefriertrockner. Anschließend wird das Pulvergemisch einem Zyklus in einer FAST-Presse unterzogen. Der verwendete Druck beträgt 40 MPa. Die Aufheizrate beim FAST-Pressen beträgt anfangs 300 K/min; sie wird bei 1000°C auf 30 K/min reduziert. Bei der Maximaltemperatur von 1250°C erfolgt eine Haltezeit von 5 min. In einer Kanthal-Hippe wird in Luftatmosphäre bei 300 MPa nachgehippt. Die anschließende Abkühlung erfolgt ungeregelt. Danach stellt sich eine Dichte von > 99,9% der TD ein. Der gemessene Transparenzgrad liegt bei 20% des theoretisch möglichen Wertes des Spinells. Deshalb wird anschließend ein Hippen bei 1200°C und 2 Stunden Haltezeit an Luft durchgeführt.
Der gesamte Verfahrenszyklus in der FAST-Presse dauert - ohne Abkühlung - 23 min. Die resultierende Korngröße beträgt ca. 300 nm und die Härte HV10 beträgt 18 GPa. Der RIT-Wert beträgt danach >90% des theoretisch möglichen Wertes des Spinells.

### Beispiel 3:

Spinell wird mit Al₂O₃-Pulver mittels Rührwerks-Kugelmahlung 2 Stunden einer Mischmahlung (70% Spinell + 30% Al₂O₃) unterzogen. Die Trocknung erfolgt in einem Gefriertrockner. Anschließend wird das Pulvergemisch einem Zyklus in einer FAST-Presse unterzogen. Der verwendete Druck beträgt 40 MPa. Die Aufheizrate beim FAST-Pressen beträgt anfangs 100 K/min; sie wird bei 1200°C auf 10 K/min reduziert. Bei der Maximaltemperatur von 1300°C erfolgt eine Haltezeit von 30 min. Die anschließende Abkühlung erfolgt ungeregelt. Danach stellt sich eine Dichte von > 99,9% der TD ein. Der gemessene Transparenzgrad liegt bei 60% des theoretisch möglichen Wertes des Spinells. Der gesamte Verfahrenszyklus in der FAST-Presse dauert - ohne Abkühlung - 47 min. Die resultierende Korngröße beträgt ca. 600 nm und die Härte HV10 beträgt 19 GPa.

## Patentansprüche

1. Verfahren zur Herstellung einer transparenten polykristallinen Keramik,
**dadurch gekennzeichnet,**
**dass** eine Mischung aus Keramik-Pulver in einer FAST-Presse (Field Assisted Sintering Technology) in einem einzigen Presszyklus pressgeformt und gesintert wird, wobei an eine Pressmatrize und an einen Pressstempel der FAST-Presse während des Presszyklus eine ungepulste Gleichspannung angelegt wird, wobei der Presszyklus in aufeinander folgenden Temperaturabschnitten mit unterschiedlichen Aufheizreten durchgeführt wird, als Keramik-Pulver Mischungen aus Al₂O₃- und MgAl₂O₄-Pulver verwendet werden, die mehr als 5 Vol-% Al₂O₃ enthalten, im Presszyklus die Pressmatrize und der Pressstempel mit einem, Pressdruck von ≥ 5 MPa, vorzugsweise ≥ 40 MPa, beaufschlagt wird, und wahrend des Presszyklus zwischen der Pressmatrize und dem Pressstempel eine konstante Gleichspannung von ≥ 2V, vorzugsweise ≥ 4V, angelegt wird, um bei der Pressung eine Stromdichte von ≥ 250 A/cm², vorzugsweise ≥ 5000 A/cm², zu erreichen.

2. Verfahren nach Anspruch 1,
**dadurch gekennzeichnet,**
**dass** das Al₂O₃- und MgAl₂O₄- pulver mit Primärkorngrößen von ≤ 500 nm, vorzugweise ≤ 300 nm, verwendet wird.

3. Verfahren nach Anspruch 1,
**dadurch gekennzeichnet**
**dass** der Presszyklus in einem ersten Temperaturabschnitt bis 1200°C mit einer Aufheizrate von ≥ 50 K/min, vorzugsweise ≥ 100 K/min, durchgeführt wird, und der bei 1200°C in einem anschließenden zweiten Temperaturabschnitt bis zu einer Maximaltemperatur von 1300°C auf eine Aufheizrate von 10 K/min reduziert wird, wobei bei der Maximaltemperatur von 1300°C eine Haltezeit von 1 bis 60 min, vorzugsweise 30 min, erfolgt, und der Presszyklus innerhalb einer Gesamtdauer von 10 bis 60 min erfolgt.

4. Verfahren nach Anspruch 1,
**dadurch gekennzeichnet**
**dass** der Presszyklus in einem ersten Temperaturabschnitt bis 1000°C, mit einer Aufheizrate von ≥ 300 K/min durchgeführt witd, und der bei 1000°C in einem anschließende zweiten Temperaturabschnitt bis zu einer Maximaltemperatur von 1250°C auf eine Aufheizrate von 30 K/min reduziert wird, wobei bei der Maximaltemperatur von 1250°C eine Haltezeit von 5 min, erfolgt, wonach ein Hippen (Heiß isostatisches Pressen) bei einem Druck von 100 bis 350 MPa, vorzugsweise 300 MPa, erfolgt.

5. Verfahren nach Anspruch 4,
**dadurch gekennzeichnet,**
**dass** das Hippen bei einer Temperatur erfolgt, die ≤ 100°C unterhalb der Sintertemperatur liegt.

6. Verfahren nach Anspruch 4,
**dadurch gekennzeichnet**
**dass** das Hippen bei einem Druck von 100 bis 300 MPa, vorzugsweise 210 MPa, erfolgt.

7. Verfahren nach Anspruch 4,
**dadurch gekennzeichnet,**
**dass** das Hippen in einer Widerstands-beheizten Hippe durchgeführt wird.

8. Verfahren nach Anspruch 4,
**dadurch gekennzeichnet,**
**dass** das Hippen in einer Kanthal-Hippe erfolgt.

9. Verfahren nach Anspruch 7,
**dadurch gekennzeichnet,**
**dass** das Hippen in einer Argon-Atmosphäre, vorzugsweise in einer Luft-Atmosphäre, erfolgt.

10. Verfahren nach einem der vorhergehenden Anspruche,
**dadurch gekennzeichnet,**
**dass** die hergestellte Sinterkeramik abschließend poliert wird, so dass sich ein RIT-Wert von ≥ 70% des theoretischen Maximalwertes ergibt.

## Claims

1. A method for producing a transparent polycrystalline ceramic,
**characterised in that**
a mixture of ceramic powder is press-formed and sintered in a FAST (field assisted sintering technology) press in a single press cycle, wherein during the press cycle a non-pulsed DC voltage is applied to a press die and to a press ram of the FAST press, wherein the press cycle is performed in consecutive temperature stages at different heating rates, mixtures of Al₂O₃ and MgAl₂O₄ powder containing more than 5% by volume Al₂O₃ are used as the ceramic powder, a pressing power of ≥ 5 MPa, preferably ≥ 40 MPa, is applied to the press die and the press ram in the press cycle, and during the press cycle a constant DC voltage of ≥ 2V, preferably ≥ 4V, is applied between the press die and the press ram in order to achieve a current density of ≥ 250 A/cm², preferably ≥ 5000 A/cm², during the pressing.

2. A method according to claim 1,
**characterised in that**
the Al₂O₃ and MgAl₂O₄ powder is used with primary grain sizes of ≤ 500 nm, preferably ≤ 300 nm.

3. A method according to claim 1,
**characterised in that**
the press cycle is performed in a first temperature stage up to 1200°C at a heating rate of ≥ 50 K/min, preferably ≥ 100 K/min, and at 1200°C in a subsequent second temperature stage up to a maximum temperature of 1300°C the heating rate is reduced to 10 K/min, wherein at the maximum temperature of 1300°C a holding time of 1 to 60 min, preferably 30 min, is effected, and the press cycle is effected within a total duration of 10 to 60 min.

4. A method according to claim 1,
**characterised in that**
the press cycle is performed in a first temperature stage up to 1000°C at a heating rate of ≥ 300 K/min, and at 1000°C in a subsequent second temperature stage up to a maximum temperature of 1250°C heating rate is reduced to 30 K/min, wherein at the maximum temperature of 1250°C a holding time of 5 min is effected, after which hot isostatic pressing is effected at a pressure of 100 to 350 MPa, preferably 300 MPa.

5. A method according to claim 4,
**characterised in that**
the hot isostatic pressing is effected at a temperature that lies ≤ 100°C below the sintering temperature.

6. A method according to claim 4,
**characterised in that**
the hot isostatic pressing is effected at a pressure of 100 to 300 MPa, preferably 210 MPa.

7. A method according to claim 4,
**characterised in that**
the hot isostatic pressing is performed in a resistance-heated HIP (hot isostatic press) device.

8. A method according to claim 4,
**characterised in that**
the hot isostatic pressing is effected in a Kanthal HIP device.

9. A method according to claim 7,
**characterised in that**
the hot isostatic pressing is effected in an argon atmosphere, preferably in an air atmosphere.

10. A method according to one of the preceding claims,
**characterised in that**
the sintered ceramic that is produced is finally polished so that an RIT value of ≥ 70 % of the theoretical maximum value results.

## Revendications

1. Procédé pour la production d'une céramique polycristalline transparente, **caractérisé**
**en ce qu'**on moule par compression et soumet à un frittage un mélange de poudres de céramique dans une presse FAST (Field Assisted Sintering Technology) en un seul cycle de compression, en appliquant pendant le cycle de compression une tension continue non pulsée sur une matrice de presse et un piston de presse de la presse FAST, en effectuant le cycle de compression en sections de température successives à différentes vitesses de chauffe, en utilisant comme poudres de céramique des mélanges de poudres d'Al₂O₃ et de MgAl₂O₄ qui contiennent plus de 5 % en volume d'Al₂O₃, en appliquant dans le cycle de compression sur la matrice de presse et le piston de presse une pression de compression de ≥ 5 MPa, de préférence de ≥ 40 MPa, et en appliquant pendant le cycle de compression entre la matrice de presse et le piston de presse une tension continue constante de ≥ 2V, de préférence de ≥ 4V, afm d'atteindre lors de la compression une densité de courant de ≥ 250 A/cm², de préférence de ≥ 5 000 A/cm².

2. Procédé selon la revendication 1,
**caractérisé**
**en ce qu'**on utilise des poudres d'Al₂O₃ et de MgAl₂O₄ à tailles de particules de ≤ 500 nm, de préférence ≤ 300 nm.

3. Procédé selon la revendication 1,
**caractérisé**
**en ce qu'**on effectue le cycle de compression dans une première section de température jusqu'à 1200°C à une vitesse de chauffe de ≥ 50 K/min, de préférence de ≥ 100 K/min, et qui à 1 200 °C est réduite dans une deuxième section de température subséquente à une vitesse de chauffe de 10 K/min jusqu'à une température maximale de 1 300 °C, à la température maximale de 1300 °C se déroulant un temps de palier de 1 à 60 min, de préférence 30 min, et le cycle de presse s'effectuant en l'espace d'une durée totale de 10 à 60 min.

4. Procédé selon la revendication 1,
**caractérisé**
**en ce qu'**on effectue le cycle de compression dans une première section de température jusqu'à 1 000 °C à une vitesse de chauffe de ≥ 300 K/min, et qui à 1 000 °C est réduite dans une deuxième section de température subséquente à une vitesse de chauffe de 30 K/min jusqu'à une température maximale de 1 250 °C, à la température maximale de 1 250 °C se déroulant un temps de palier de 5 min, à la suite de quoi s'effectue une compression isostatique à chaud (CIC) sous une pression de 100 à 350 MPa, de préférence 300 MPa.

5. Procédé selon la revendication 4,
**caractérisé en ce que**
la CIC s'effectue à une température qui se situe à ≤ 100 °C au-dessous de la température de frittage.

6. Procédé selon la revendication 4,
**caractérisé en ce que**
la CIC s'effectue sous une pression de 100 à 300 MPa, de préférence de 210 MPa.

7. Procédé selon la revendication 4,
**caractérisé en ce que** la CIC est effectuée dans une presse pour CIC chauffée par résistance.

8. Procédé selon la revendication 4,
**caractérisé en ce que**
la CIC s'effectue dans une presse pour CIC à Kanthal.

9. Procédé selon la revendication 4,
**caractérisé en ce que**
la CIC s'effectue dans une atmosphère d'argon, de préférence dans une atmosphère d'air.

10. Procédé selon l'une quelconque des revendications précédentes,
**caractérisé**
**en ce qu'**ensuite on polit la céramique frittée produite, de sorte qu'il en résulte une valeur de la transmission en ligne RIT de ≥ 70 % de la valeur maximale théorique.
